# EUROPÄISCHE PATENTSCHRIFT

(11) **EP 0 491 847 B1**
(45) Veröffentlichungstag und Bekanntmachung des Hinweises auf die Patenterteilung: **13.04.1994**
(21) Anmeldenummer: 90914724.1
(22) Anmeldetag: 04.09.1990
(51) Int. Cl.: C09B 67/22, D06P 1/16, D06P 3/84, C09B 29/20

(54) **MEHRKOMPONENTEN-MISCHUNGEN HOCHROTER DISPERSIONS-AZOFARBSTOFFE**
MULTICOMPONENT MIXTURES OF BRIGHT RED, DISPERSED AZO DYES
MELANGES MULTICONSTITUANTS DE COLORANTS AZO DE DISPERSION ROUGE VIF

(30) Priorität: 12.09.1989 DE 3930393
(43) Veröffentlichungstag der Anmeldung: 01.07.1992
(73) Patentinhaber: HOECHST AKTIENGESELLSCHAFT, 65926 Frankfurt am Main (DE)
(72) Erfinder: KÜHN, Reinhard, D-6000 Frankfurt am Main (DE); BOOS, Margareta, D-6234 Hattersheim am Main (DE); BINDER, Rudolf, D-6457 Maintal (DE); HOFMANN, Klaus, D-6000 Frankfurt am Main (DE)
(86) Internationale Anmeldenummer: EP9001480
(87) Internationale Veröffentlichungsnummer: WO9104302

(56) Entgegenhaltungen:
- EP-A- 0 001 267
- EP-A- 0 185 207
- FR-A- 1 275 797
- FR-A- 2 305 475
- GB-A- 1 063 155

## Beschreibung

Die vorliegende Erfindung betrifft Farbstoffpräparationen in Form einer Mehrkomponenten-Mischung von hochroten Dispersions-Azofarbstoffen und ihre Verwendung zum Färben von synthetischen Fasern.

Das Färben von synthetischen Fasermaterialien mit Dispersionsfarbstoffen durch Ausziehen aus wäßrigem Medium unter Anwendung von HT-Färbebedingungen bei Temperaturen zwischen 105° und 140°C ist allgemeiner Stand der Technik und wird im industriellen Maßstab praktiziert.

Dispersionsfarbstoffe sind von Natur aus wasserunlösliche chemische Verbindungen, die keine löslichmachende Gruppierung im Molekül aufweisen. Als organische Farbpigmente werden sie üblicherweise aus wäßriger Dispersion in kolloidaler Form zum Färben von hydrophoben Synthesefasern, wie z.B. 2 1/2-Acetat-, Triacetat-, Polyamid- oder Polyester-Fasertypen, eingesetzt und man muß sie für diesen Zweck durch einen sogenannten Finish, vorteilhaft unter der Mitwirkung von nichtionischen oder anionischen Dispergiermitteln sowie gegebenenfalls sonstigen Hilfsmitteln, erst in eine aufziehbare, zweckmäßig standardisierte Feinverteilung bringen. Ohne eine solche Vorbehandlung bzw. Zusätze wäre eine fleckenfreie sowie egale Färbung des Substrates nicht zu erzielen.

Wie der Fachmann auf dem erwähnten Arbeitsgebiet jedoch weiß, bestehen im Falle des Färbens hochroter Farbtöne Schwierigkeiten, insofern als einmal die Anzahl von Einzelfarbstoffen mit der gewünschten Nuancengebung sehr beschränkt ist und außerdem alle dafür geeigneten Farbstoffindividuen den Nachteil zeigen, daß sie beim Hochtemperaturfärben von Wickelkörpern, also in der Hauptsache bei Kreuzspulen und Kettbäumen, unter kritischen Bedingungen - selbst bei bestmöglichem Finish - häufig zu Abfiltrationen und damit zu reibunechten Färbungen neigen. Auch ist der für den Ausfall der Färbungen maßgebende Aufbau derartiger Einzelfarbstoffe in der Aufheizphase meist zu langsam und deshalb unbefriedigend, weil aus diesem Anlaß immer bis an die obere Grenze der Verträglichkeit für Farbstoff und Faser gehende Färbetemperaturen sowie lange Färbezeiten erforderlich werden.

Bei den aufgrund der diskutierten Unzulänglichkeiten im Hinblick auf die erreichbaren Färbeergebnisse in Rede stehenden Farbmitteln handelt es sich vor allem um die Dispersionsfarbstoffe vom Typ C.I. Disperse Red 200, C.I. Disperse Red 151 u.a.

In Anbetracht der zuvor geschilderten Sachlage bestand also die Aufgabe darin, hochrote Dispersionsfarbstoffe mit einwandfreier Verfahrenscharakteristik bezüglich färberischem Verhalten, Aufbau und Dispersionsstabilität für die Herstellung von Typ- und Kombinationsfärbungen auf synthetischen Fasern entsprechend der Ausziehtechnik unter Hochtemperatur(HT)-Bedingungen zu entwickeln bzw. diese Zielsetzung unter Verwendung von leistungsfähigen Kombinationen auf Basis von zwei oder drei speziell ausgewählten roten Dispersionsfarbstoffen zu verwirklichen. Insbesondere mit Rücksicht auf die Anwendung der ins Auge gefaßten Farbmittel in der Wickelkörperfärberei war auch der Gesichtspunkt wesentlich, daß Abfiltrationen von nicht fixiertem Farbstoff auf der Ware unbedingt vermieden werden müssen.

Als Lösung der an den Fachmann gerichteten Aufgabe wurde erfindungsgemäß nun gefunden, daß man die erwähnten Nachteile der roten Einzelfarbstoffe vom obengenannten Typ beim HT-Ausziehfärben von insbesondere PES-Fasern durch planmäßigen Einsatz einer Kombination aus den nachfolgend beschriebenen Azoverbindungen vermeiden kann.

Gegenstand der vorliegenden Erfindung sind demnach Farbstoffpräparationen in Form einer Mehrkomponenten-Mischung von roten Dispersions-Azofarbstoffen, die dadurch gekennzeichnet sind, daß sie aus
80 bis 20 Gewichtsteilen, vorzugsweise 70 bis 25 Gewichtsteilen des Farbstoffes der Formel I 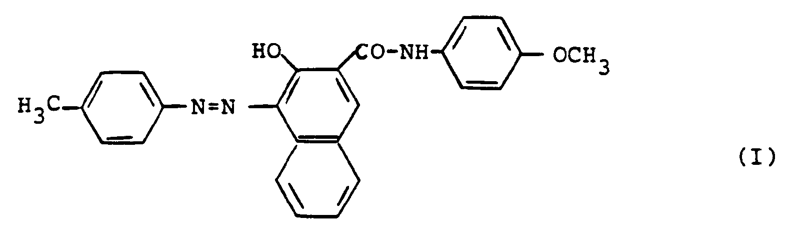
und
20 bis 80 Gewichtsteilen. vorzugsweise 25 bis 70 Gewichtsteilen des Farbstoffes der Formel II 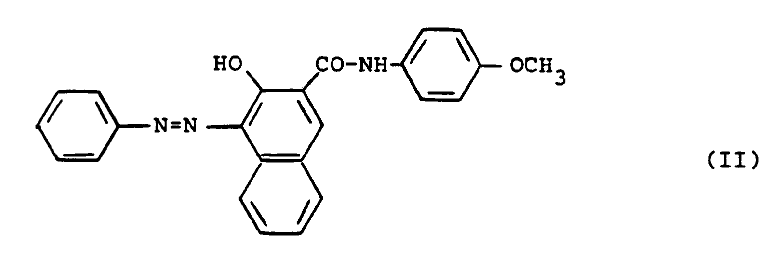
sowie als Nuancierungskomponente
0 bis 20 Gewichtsteilen, vorzugsweise 5 bis 15 Gewichtsteilen des Farbstoffes C.I. Vat Red 41 mit der C.I.-Nr. 73300 entsprechend der Formel III 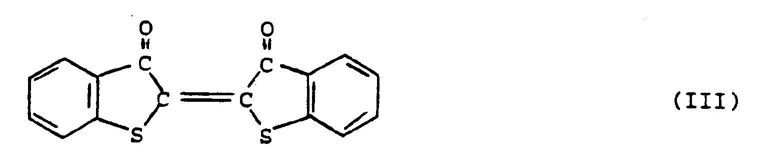
bestehen oder diese Farbstoffe enthalten, mit der Maßgabe, daß die Summe der anteiligen Mengen an den zugrundeliegenden Einzelfarbstoffen sich jeweils auf ein Gesamtgewicht der Präparation von 100 Gewichtsteilen ergänzt und (im Falle von Handelsprodukten) auf den Gehalt an Reinfarbstoff bezogen ist.

Die erfindungsgemäßen Farbstoffmischungen enthalten oder bestehen grundsätzlich aus den beiden Monoazofarbstoffen der Formeln I und II. Neben diesen Basisbestandteilen, auf welche sich die vorstehend genannten Gewichtsverhältnisse stützen, können sie darüber hinaus auch herkömmliche Stellmittel und/oder Hilfsmittel und gegebenenfalls noch andere Farbstoffe, wie z.B. den Küpenfarbstoff der Formel III einschießen.

Die Realisierbarkeit der vorstehend definierten Erfindungsidee war nun aber keineswegs naheliegend. Im Hinblick auf die Lehren des relevanten Standes der Technik konnte nämlich nicht vorausgesehen werden, daß die Bereitstellung einer Mischung von in erster Linie Azoverbindungen der Formeln I und II in den beanspruchten Mengenbereichen für die Erzeugung von hochroten HT-Ausziehfärbungen auf Synthesefasern zu Resultaten führen würde, welche alle Anforderungen bezüglich Aufbau- und Egalfärbevermögen sowie Dispersionsstabilität in der wäßrigen Flotte optimal erfüllen.

Ein dermaßen qualifizierter Befund ist wegen des bekannten Ausziehverhaltens der Einzelfarbstoffe unter HT-Bedingungen nicht erwartet worden, zumal vornehmlich die Komponente der Formel I für sich allein genommen - selbst mit bestem Finish - die beanstandeten Mängel an den Tag legt. Die infolge solcher Erfahrungen als problematisch eingestufte rote Azoverbindung der Formel I weist als Diazokomponente p-Toluidin auf. Wird dieser Bestandteil der Formel I der beanspruchten Farbstoffpräparation nunmehr mit dem isomeren Farbstoff kombiniert, der o-Toluidin als Diazokomponente bei gleicher Kupplungskomponente besitzt (EP-PS 0 185 207), dann bekommt man bloß ein sich beim HT-Ausziehfärben von Wickelkörpern ebenfalls ungünstig verhaltendes rotes Isomerengemisch. Unter diesen Umständen war es daher umso erstaunlicher, daß die erfindungsgemäße Farbstoffmischung mit der Komponente der Formel II, welche unsubstituiertes Anilin als Diazokomponente umfaßt und die sich von den beiden zuvor besprochenen Azoverbindungen lediglich durch das Fehlen der ortho- bzw. para-ständigen CH₃-Gruppe unterscheidet, aufgrund eines synergistischen Effektes brauchbare Ergebnisse liefert. Damit hat sich - wie durch experimentelle Untersuchungen bestätigt worden ist - überraschenderweise herausgestellt, daß Mischungen von mehreren dieser Einzelfarbstoffe nur beim Vorliegen ganz bestimmter konstitutioneller Merkmale sich im Ziehverhalten synergistisch verhalten, während Mischungen anderer Farbstoffe kein besseres Ziehverhalten als die entsprechenden Einzelfarbstoffe zuwege bringen.

Die fakultativ in den Farbstoff-Präparationen anwesende Komponente der Formel III dient ausschließlich gewissen Nuancierungsmöglichkeiten, um im Handel befindliche rote Einzelfarbstoffe ohne Rezeptumstellung weitgehend farbtongetreu ersetzen zu können.

Für die Herstellung der erfindungsgemäßen Präparationen ist es indessen unerheblich, ob die zugrundeliegenden Farbstoffindividuen als bereits fertig gefinishte (bei ihrer Anwendung als Einzelkomponente für den beabsichtigten Zweck sich sonst weitgehend unzulänglich erweisende) Farbstoffe kombiniert werden, oder ob man sie gemeinsam als vorgefertigtes Gemisch dem Einfluß eines Finishprozesses aussetzt. Die beanspruchten Präparationen können aber auch in der Weise erhalten werden, daß eine Kombination von p-Toluidin und Anilin im Gewichtsverhältnis (80 bis 20):(20 bis 80), bevorzugt (70 bis 25):(25 bis 70), diazotiert und anschließend auf die Kupplungskomponente 3-Hydroxy-2-naphthoesäure-p-anisidid gekuppelt wird, worauf man die so durch Mischkupplung erzeugte Mehrkomponenten-Mischung aus den Farbstoffindividuen der Formeln I und II oder einen eventuell daraus gebildeten Mischkristall einer üblichen Finishbehandlung, gegebenenfalls unter Teilnahme des Farbstoffes der Formel III, sowie der Standardisierung unterwirft. Diese eben ausgebreiteten Tatsachen geben einen Hinweis darauf, daß hier nicht irgendein besonderer Finish, sondern ein Synergismus für den erzielten vorteilhaften Effekt verantwortlich ist.

Farbstoffpräparationen mit den erfindungsgemäßen Merkmalen, die in Form einer z.B. durch Vermahlung mittels Dispergiermittel(n) resultierenden Feinverteilung (in färbefertigem Zustand) vorliegen, sind hervorragend geeignet für das Ausziehfärben von bekannten Synthesefasern für sich allein oder als Bestandteil von solche synthetischen Fasern aufweisenden Mischungen mit Naturfasern oder Regeneratfasern unter Hochtemperatur-Bedingungen (105° - 140°C) des wäßrigen Färbemediums. Sie werden nach der vorliegenden Erfindung eingesetzt als Dispersions-Rotfarbstoff zur Erzielung von vor allem hochroten Typfarbtönen auf den Synthesefasern bzw. der Synthesefaserkomponente von Fasermischungen, oder auch von Kombinationsfarbtönen. Ein Färbeverfahren der genannten Art sowie die Verwendung der neuen Farbstoffpräparationen auf der erwähnten Grundlage stellen zugleich weitere Gegenstände der vorliegenden Erfindung dar.

Mittels der erfindungsgemäß durch ihre Struktur erläuterten Farbstoffpräparationen lassen sich als synthetisches Fasergut in erster Linie hydrophobe Polyesterfasern auf Basis von Polyethylenterephthalat, Polybutylenterephthalat oder Polycyclohexylenterephthalat colorieren, sowie auch Fasern, welche sich von Mischpolymerisaten solcher PES herleiten.

Die vorliegende Erfindung ist prinzipiell anwendbar auf das Färben des zuvor genannten Fasermaterials in verschiedenen Verarbeitungszuständen, beispielsweise als Flocke, Kammzug, Garn oder Stückware.

Das Färben von synthetischen Fasern bzw. deren Mischungen mit den erfindungsgemäßen Farbstoffmischungen wird nach der konventionellen Hochtemperatur(HT)-Ausziehmethode bei Temperaturen zwischen 105° und 140°C vorgenommen. An die eigentliche Färbung schließt sich vorteilhafterweise eine reduktive Reinigung oder eine dispergiermittelunterstützte Nachbehandlung der gefärbten Ware zur Entfernung nicht restlos fixierter Farbstoffanteile an.

Das nachstehende Ausführungsbeispiel soll den durch die Erfindung erzielbaren Effekt demonstrieren ohne sie, vor allem in Bezug auf die angegebenen Mischungsverhältnisse einzuschränken.

### Beispiel:

Auf einem für die Behandlung von Wickelkörpern ausgerüsteten Färbeapparat färbt man eine Kreuzspule von 300 g Gewicht aus Polyesterfilament mit einer wäßrigen Dispersion, welche - bezogen auf das Gewicht der trockenen Ware - 2,5 % einer Mischung von bereits gefinishten Farbstoffen in handelsüblicher Beschaffenheit mit der Zusammensetzung aus
60 Gewichtsteilen Farbstoff der Formel I
28 Gewichtsteilen Farbstoff der Formel II und
12 Gewichtsteilen Farbstoff der Formel III
enthält und deren pH-Wert vorher auf 5 eingestellt worden ist, beim Flottenverhältnis von 1:15 sowie unter wechselnder Flottenzirkulationsrichtung 90 Minuten bei 135°C.

Zur Fertigstellung der Garnfärbung folgt eine praxisübliche reduktive Nachreinigung.

Man erhält eine hochrote, reibechte Färbung der Ware ohne Abfiltrationen von nicht fixierten Farbstoffen.

### Vergleich:

Die vorstehende Ausziehfärbung wurde unter gleichen Bedingungen wiederholt, mit der Ausnahme, daß anstelle der Farbstoffmischung hier - bezogen auf das Warengewicht - 2,5 % des Farbstoffes der Formel I in gefinishter, handelsüblicher Beschaffenheit eingesetzt worden ist.

Man erhält eine farbtongleiche, in vielen Fällen wegen Abfiltrationen des Farbstoffes unbrauchbare, reibunechte Färbung des Garns.

Überprüft man nun im Falle der zuvor durchgeführten Färbetests das Ziehverhalten der jeweiligen Farbmittel während der Färbeoperation, so macht sich beim Beispiel - gegenüber dem Vergleich - ein früher beginnender, gleichmäßigerer coloristischer Aufbau bemerkbar.
Filterproben von wäßrigen Flotten der beiden Farbstoff-Präparationen zeigen, daß der Einzelfarbstoff (Vergleich) zu unerwünschten Abscheidungen zwischen Lagen der Wicklung neigt, wohingegen die Farbstoff-Mischung (Beispiel) sich in dieser Hinsicht als einwandfrei gut erweist.

## Patentansprüche (Patentansprüche für folgende(n) Vertragsstaat(en): CH, LI, DE, FR, GB, IT)

1. Farbstoffpräparation in Form einer Mehrkomponenten-Mischung von roten Dispersions-Azofarbstoffen, dadurch gekennzeichnet, daß sie aus
80 bis 20 Gewichtsteilen des Farbstoffes der Formel I 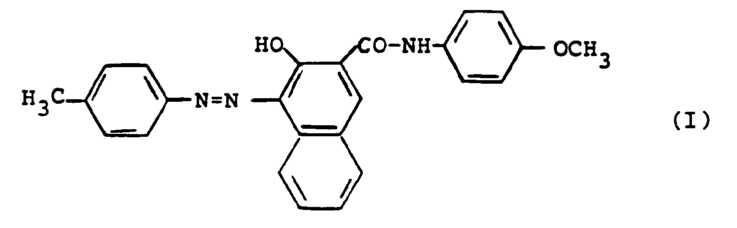 und
20 bis 80 Gewichtsteilen des Farbstoffes der Formel II 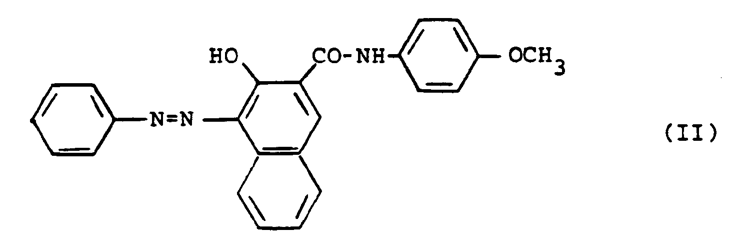 sowie als Nuancierungskomponente
0 bis 20 Gewichtsteilen des Farbstoffes C.I. Vat Red 41 mit der C.I.-Nr. 73300 entsprechend der Formel III 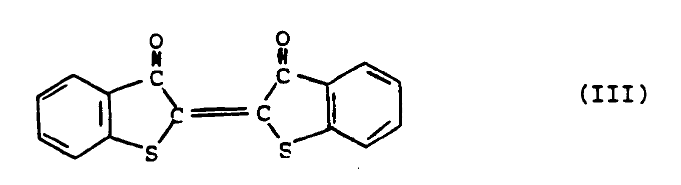 besteht oder diese Farbstoffe enthält, mit der Maßgabe, daß die Summe der anteiligen Mengen an den zugrundeliegenden Farbstoffindividuen sich jeweils auf ein Gesamtgewicht der Präparation von 100 Gewichtsteilen ergänzt und auf den Gehalt an Reinfarbstoff bezogen ist.

2. Farbstoffpräparation nach Anspruch 1, dadurch gekennzeichnet, daß das Mischungsverhältnis der zugrundeliegenden Farbstoffindividuen
70 bis 25 Gewichtsteile des Farbstoffes der Formel I
25 bis 70 Gewichtsteile des Farbstoffes der Formel II und
5 bis 15 Gewichtsteile des Farbstoffes der Formel III
beträgt und zugleich der dort formulierten Maßgabe entsprochen wird.

3. Farbstoffpräparation nach Anspruch 1 oder 2, dadurch gekennzeichnet, daß die Mischung aus den Dispersionsfarbstoffen der Formeln I und II sowie gegebenenfalls dem Küpenfarbstoff der Formel III in Form einer durch Vermahlung mittels Dispergiermittel(n) und Standardisierung resultierenden Feinverteilung im färbefertigen Zustand vorliegt.

4. Farbstoffpräparation nach Anspruch 3, erhältlich
- durch Mischen der zugrundeliegenden Farbstoffindividuen der Formeln I und II und gegebenenfalls der Formel III, welche vorgängig separat, fertig gefinisht sowie standardisiert worden sind, oder
- durch Mischen der zugrundeliegenden ungefinishten Farbstoffindividuen der Formeln I und II und gegebenenfalls der Formel III und anschließendem oder schon während des Mischvorgangs durchgeführtem gemeinsamen Finish sowie Standardisierung, oder
- durch Finishen einer durch gemeinsame Azokupplung der Diazoniumverbindungen einer Kombination von p-Toluidin und Anilin im Gewichtsverhältnis (80 bis 20):(20 bis 80), vorzugsweise (70 bis 25):(25 bis 70), auf 3-Hydroxy-2-naphthoesäure-p-anisidid angefallenen Mehrkomponenten-Mischung aus den zugrundeliegenden Farbstoffindividuen der Formeln I und II oder eines eventuell daraus gebildeten Mischkristalles, sowie Standardisierung gegebenenfalls unter Teilnahme des Farbstoffes der Formel III.

5. Verwendung einer Farbstoffpräparation nach einem oder mehreren der Ansprüche 1 bis 4 als Dispersions-Rotfarbstoff zur Erzielung von Typ- oder Kombinationsfarbtönen auf Synthesefasern für sich allein oder als Bestandteil von solche synthetische Fasern aufweisenden Mischungen in einem Ausziehfärbeprozeß unter Hochtemperatur(HT)-Bedingungen.

6. Verwendung nach Anspruch 5 zum HT-Ausziehfärben von Wickelkörpern.

7. Verfahren zum Ausziehfärben von Textilmaterial aus Synthesefasern für sich allein oder als Bestandteil von solche synthetische Fasern aufweisenden Mischungen mit Naturfasern oder Regeneratfasern unter Hochtemperatur(HT)-Bedingungen, dadurch gekennzeichnet, daß man als Dispersions-Rotfarbstoff für Typ- und Kombinationsfärbungen eine Farbstoffpräparation nach einem oder mehreren der Ansprüche 1 bis 4 einsetzt.

8. Verfahren nach Anspruch 7, dadurch gekennzeichnet, daß man Wickelkörper durch Ausziehen bei Temperaturen zwischen 105° und 140°C färbt.

9. Textilmaterial aus Synthesefasern für sich allein oder als Bestandteil von solche synthetische Fasern aufweisenden Mischungen, welches mit einer Farbstoffpräparation nach einem oder mehreren der Ansprüche 1 bis 4 gefärbt worden ist.

10. Textilmaterial aus Synthesefasern für sich allein oder als Bestandteil von solche synthetische Fasern aufweisenden Mischungen, welches nach einem Verfahren nach Anspruch 7 oder 8 gefärbt worden ist.

## Patentansprüche (Patentansprüche für folgende(n) Vertragsstaat(en): ES)

1. Farbstoffpräparation in Form einer Mehrkomponenten-Mischung von roten Dispersions-Azofarbstoffen, dadurch gekennzeichnet, daß sie aus
80 bis 20 Gewichtsteilen des Farbstoffes der Formel I 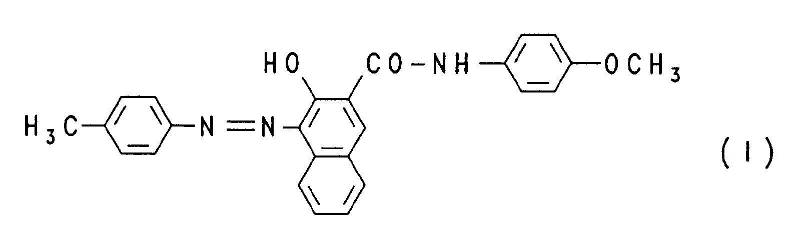 und
20 bis 80 Gewichtsteilen des Farbstoffes der Formel II 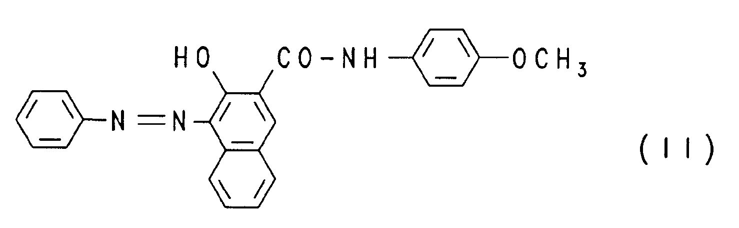 sowie als Nuancierungskomponente
0 bis 20 Gewichtsteilen des Farbstoffes C.I. Vat Red 41 mit der C.I.-Nr. 73300 entsprechend der Formel III 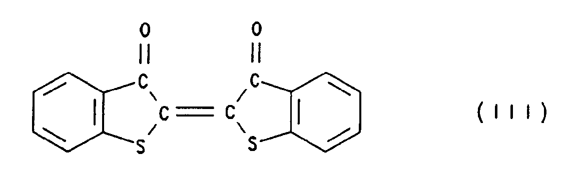 besteht oder diese Farbstoffe enthält, mit der Maßgabe, daß die Summe der anteiligen Mengen an den zugrundeliegenden Farbstoffindividuen sich jeweils auf ein Gesamtgewicht der Präparation von 100 Gewichtsteilen ergänzt und auf den Gehalt an Reinfarbstoff bezogen ist.

2. Farbstoffpräparation nach Anspruch 1, dadurch gekennzeichnet, daß das Mischungsverhältnis der zugrundeliegenden Farbstoffindividuen
70 bis 25 Gewichtsteile des Farbstoffes der Formel I,
25 bis 70 Gewichtsteile des Farbstoffes der Formel II und
5 bis 15 Gewichtsteile des Farbstoffes der Formel III
beträgt und zugleich der dort formulierten Maßgabe entsprochen wird.

3. Farbstoffpräparation nach Anspruch 1 oder 2, dadurch gekennzeichnet, daß die Mischung aus den Dispersionsfarbstoffen der Formel I und II sowie gegebenenfalls dem Küpenfarbstoff der Formel III in Form einer durch Vermahlung mittels Dispergiermittel(n) und Standardisierung resultierenden Feinverteilung im färbefertigen Zustand vorliegt.

4. Farbstoffpräparation nach Anspruch 3, erhältlich
- durch Mischen der zugrundeliegenden Farbstoffindividuen der Formel I und II und gegebenenfalls der Formel III, welche vorgängig separat fertig gefinisht sowie standardisiert worden sind, oder
- durch Mischen der zugrundeliegenden ungefinishten Farbstoffindividuen der Formel I und II und gegebenenfalls der Formel III und anschließendem oder schon während des Mischvorgangs durchgeführtem gemeinsamen Finish sowie Standardisierung, oder
- durch Finishen einer durch gemeinsame Azokupplung der Diazoniumverbindungen einer Kombination von p-Toluidin und Anilin im Gewichtsverhältnis (80 bis 20):(20 bis 80), vorzugsweise (70 bis 25):(25 bis 70), auf 3-Hydroxy-2-naphthoesäure-p-anisidid angefallenen Mehrkomponenten-Mischung aus den zugrundeliegenden Farbstoffindividuen der Formeln I und II oder eines eventuell daraus gebildeten Mischkristalles, sowie Standardisierung gegebenenfalls unter Teilnahme des Farbstoffes der Formel III.

5. Verfahren zur Herstellung einer Farbstoffpräparation nach mindestens einem der Ansprüche 1 bis 4, dadurch gekennzeichnet, daß man die Farbstoffkomponenten in gefinishter oder ungefinishter Form und gegebenenfalls zusätzliche, in der Präparation vorhandene Hilfsmittel miteinander vermischt und erforderlichenfalls die Mischung von ungefinishten Farbstoffen dem Einfluß eines Finishprozesses aussetzt, oder daß man eine Kombination von p-Toluidin und Anilin im Gewichtsverhältnis von (80 bis 20):(20 bis 80) diazotiert und anschließend auf 3-Hydroxy-2-naphthoesäure-p-anisidid kuppelt und die so durch Mischkupplung erzeugte Mehrkomponenten-Mischung aus den Farbstoffindividuen der Formeln I und II oder einen eventuell daraus gebildeten Mischkristall einer üblichen Finishbehandlung, gegebenenfalls unter Teilnahme des Farbstoffes der Formel III, unterwirft, und daß man die Farbstoffmischung gegebenenfalls einer Standardisierung unterzieht.

6. Verfahren zum Ausziehfärben von Textilmaterial aus Synthesefasern für sich allein oder als Bestandteil von solche synthetische Fasern aufweisenden Mischungen mit Naturfasern oder Regeneratfasern unter Hochtemperatur(HT)-Bedingungen, dadurch gekennzeichnet, daß man als Dispersions-Rotfarbstoff für Typ- und Kombinationsfärbungen eine Farbstoffpräparation nach einem oder mehreren der Ansprüche 1 bis 4 oder eine nach Anspruch 5 hergestellte Farbstoffpräparation einsetzt.

7. Verfahren nach Anspruch 7, dadurch gekennzeichnet, daß man Wickelkörper durch Ausziehen bei Temperaturen zwischen 105 und 140°C färbt.

8. Textilmaterial aus Synthesefasern für sich allein oder als Bestandteil von solche synthetische Fasern aufweisenden Mischungen, welches mit einer Farbstoffpräparation nach einem oder mehreren der Ansprüche 1 bis 4 oder einer nach Anspruch 5 hergestellten Farbstoffpräparation gefärbt worden ist.

9. Textilmaterial aus Synthesefasern für sich allein oder als Bestandteil von solche synthetische Fasern aufweisenden Mischungen, welches nach einem Verfahren nach Anspruch 6 oder 7 gefärbt worden ist.

## Claims (Claims for the following Contracting State(s): CH, LI, DE, FR, GB, IT)

1. A dyestuff preparation in the form of a multi-component mixture of red disperse azo dyestuffs, which consists of
80 to 20 parts by weight of the dyestuff of the formula I 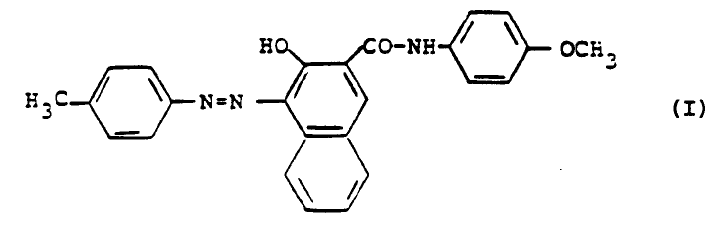 and
20 to 80 parts by weight of the dyestuff of the formula II 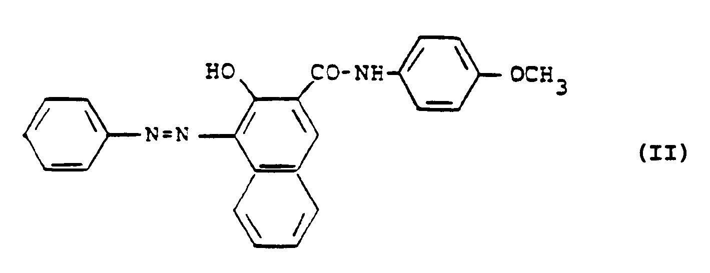 and, as the shading component,
0 to 20 parts by weight of the dyestuff C.I. Vat Red 41 having the C.I. No. 73300 and corresponding to the formula III 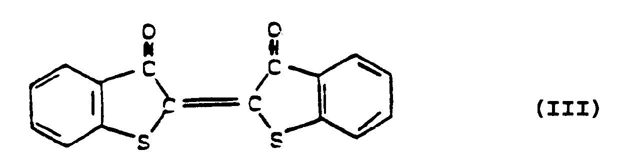 or contains these dyestuffs, with the proviso that the sum of the proportions of the individual dyestuffs on which the mixture is based in each case makes up a total weight of the preparation of 100 parts by weight and is based on the content of pure dyestuff.

2. The dyestuff preparation as claimed in claim 1, wherein the mixing ratio of the individual dyestuffs on which the mixture is based is
70 to 25 parts by weight of the dyestuff of the formula I,
25 to 70 parts by weight of the dyestuff of the formula II and
5 to 15 parts by weight of the dyestuff of the formula III,
and at the same time the proviso formulated in that claim is complied with.

3. The dyestuff preparation according to claim 1 or 2, wherein the mixture of the disperse dyestuffs of the formulae I and II and, if appropriate, of the vat dyestuff of the formula III is present in the form of a fine dispersion, in the state ready for dyeing, which results from grinding by means of dispersing agent(s) and standardization.

4. The dyestuff preparation as claimed in claim 3, obtainable
- by mixing the individual underlying dyestuffs of the formulae I and II and, if appropriate, of the formula III, which have been separately completely finished and standardized beforehand, or
- by mixing the non-finished individual underlying dyestuffs of the formulae I and II and, if appropriate, of the formula III and carrying out joint finishing and standardization subsequently or even during the mixing operation, or
- by finishing a multi-component mixture, obtained by joint azo coupling of the diazonium compounds of a combination of p-toluidine and aniline in a weight ratio of (80 to 20) : (20 to 80), preferably (70 to 25):(25 to 70), to 3-hydroxy-2-naphthoic acid p-anisidide, of the individual underlying dyestuffs of the formulae I and II, or of any mixed crystal formed therefrom, and standardizing, if appropriate with participation of the dyestuff of the formula III.

5. The use of a dyestuff preparation as claimed in one or more of claims 1 to 4 as a disperse red dyestuff for achieving standard or combination color shades on synthetic fibers by themselves or as a constituent of mixtures containing such synthetic fibers in an exhaustion dyeing process under high temperature (HT) conditions.

6. The use as claimed in claim 5 for HT exhaustion dyeing of wound packages.

7. A process for exhaustion dyeing of textile material of synthetic fibers by themselves or as a constituent of mixtures containing such synthetic fibers and natural fibers or regenerated fibers under high temperature (HT) conditions, which comprises using a dyestuff preparation as claimed in one or more of claims 1 to 4 as the disperse red dyestuff for standard and combination dyeings.

8. The process as claimed in claim 7, wherein wound packages are dyed by exhaustion at temperatures between 105° and 140°C.

9. A textile material of synthetic fibers by themselves or as a constituent of mixtures containing such synthetic fibers, which has been dyed using a dyestuff preparation as claimed in one or more of claims 1 to 4.

10. A textile material of synthetic fibers by themselves or as a constituent of mixtures containing such synthetic fibers, which has been dyed by a process as claimed in claim 7 or 8.

## Claims (Claims for the following Contracting State(s): ES)

1. A dyestuff preparation in the form of a multi-component mixture of red disperse azo dyestuffs, which consists of
80 to 20 parts by weight of the dyestuff of the formula I 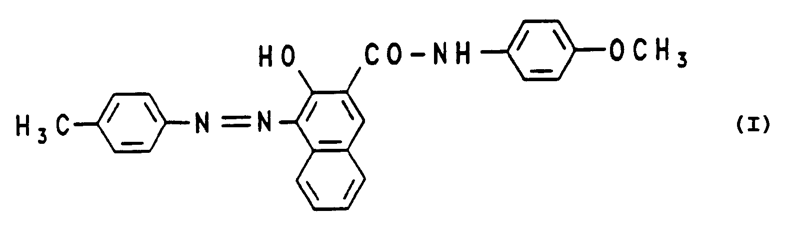 and
20 to 80 parts by weight of the dyestuff of the formula II 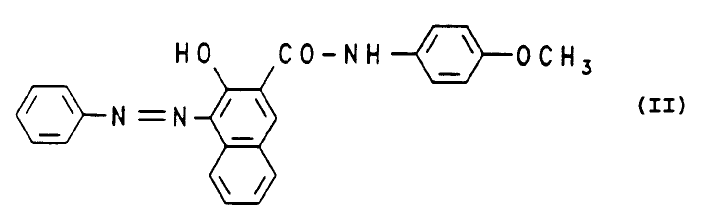 and, as the shading component,
0 to 20 parts by weight of the dyestuff C.I. Vat Red 41 having the C.I. No. 73300 and corresponding to the formula III 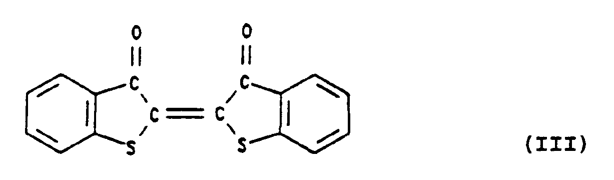 or contains these dyestuffs, with the proviso that the sum of the proportions of the individual dyestuffs on which the mixture is based in each case makes up a total weight of the preparation of 100 parts by weight and is based on the content of pure dyestuff.

2. The dyestuff preparation as claimed in claim 1, wherein the mixing ratio of the individual dyestuffs on which the mixture is based is
70 to 25 parts by weight of the dyestuff of the formula I,
25 to 70 parts by weight of the dyestuff of the formula II and
5 to 15 parts by weight of the dyestuff of the formula III,
and at the same time the proviso formulated in that claim is complied with.

3. The dyestuff preparation according to claim 1 or 2, wherein the mixture of the disperse dyestuffs of the formulae I and II and, if appropriate, of the vat dyestuff of the formula III is present in the form of a fine dispersion, in the state ready for dyeing, which results from grinding by means of dispersing agent(s) and standardization.

4. The dyestuff preparation as claimed in claim 3, obtainable
- by mixing the individual underlying dyestuffs of the formulae I and II and, if appropriate, of the formula III, which have been separately completely finished and standardized beforehand, or
- by mixing the non-finished individual underlying dyestuffs of the formulae I and II and, if appropriate, of the formula III and carrying out joint finishing and standardization subsequently or even during the mixing operation, or
- by finishing a multi-component mixture, obtained by joint azo coupling of the diazonium compounds of a combination of p-toluidine and aniline in a weight ratio of (80 to 20) : (20 to 80), preferably (70 to 25):(25 to 70), to 3-hydroxy-2-naphthoic acid p-anisidide, of the individual underlying dyestuffs of the formulae I and II, or of any mixed crystal formed therefrom, and standardizing, if appropriate with participation of the dyestuff of the formula III.

5. A process for preparing a dyestuff preparation as claimed in at least one of claims 1 to 4, which comprises mixing the dyestuff components in finished or non-finished form, and, if desired, additional assistants present in the preparation, with one another and exposing the mixture of non-finished dyes if required to the effects of a finishing process, or comprises diazotizing a combination of p-toluidine and aniline in a weight ratio of (80 to 20) : (20 to 80) and subsequently coupling the product to 3-hydroxy-2-naphthoic acid p-anisidide and subjecting the resulting multicomponent mixture, produced by mixed coupling, of the individual dyestuffs of the formulae I and II, or of any mixed crystal formed therefrom, to a conventional finishing treatment, if appropriate with participation of the dyestuff of the formula III, and subjecting the dyestuff mixture, if desired, to standardization.

6. A process for exhaustion dyeing of textile material of synthetic fibers by themselves or as a constituent of mixtures containing such synthetic fibers and natural fibers or regenerated fibers under high temperature (HT) conditions, which comprises using a dyestuff preparation as claimed in one or more of claims 1 to 4 or as prepared as claimed in claim 5 as the disperse red dyestuff for standard and combination dyeings.

7. The process as claimed in claim 6, wherein wound packages are dyed by exhaustion at temperatures between 105 and 140°C.

8. A textile material of synthetic fibers by themselves or as a constituent of mixtures containing such synthetic fibers, which has been dyed using a dyestuff preparation as claimed in one or more of claims 1 to 4 or as prepared as claimed in claim 5.

9. A textile material of synthetic fibers by themselves or as a constituent of mixtures containing such synthetic fibers, which has been dyed by a process as claimed in claim 6 or 7.

## Revendications (Revendications pour l'(les) Etat(s) contractant(s) suivant(s): CH, LI, DE, FR, GB, IT)

1. Préparations de colorants en un mélange à plusieurs composants de colorants azoïques de dispersion rouges, préparations caractérisées en ce qu'elles comprennent :
de 80 à 20 parties en poids, du colorant de formule I ci-dessous : 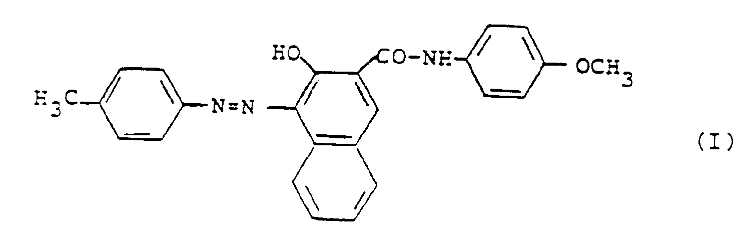 avec
de 20 à 80 parties en poids, du colorant de formule II : 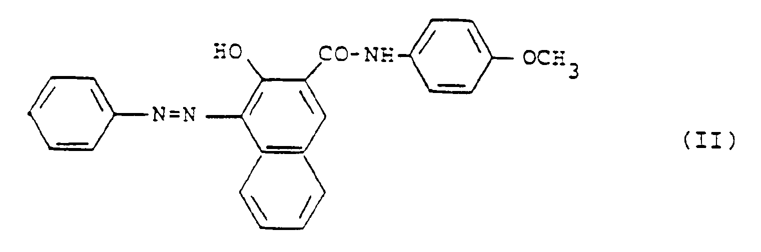 ainsi que, comme composant de nuançage,
de 0 à 20 parties en poids, du colorant rouge C.I. Vat Red 41 de numéro C.I. 73300, de formule III : 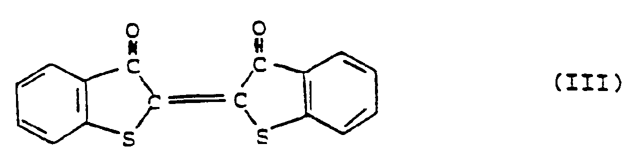 ou sont formées de ces colorants, la somme des proportions des colorants individuels de base étant toujours complétée à un poids total de la préparation de 100 parties et, dans le cas de produits du commerce, rapportée à la teneur en colorants purs.

2. Préparation selon la revendication 1 caractérisée en ce que les proportions des colorants individuels de base sont de 70 à 25 parties du colorant de formule I, de 25 à 70 parties du colorant de formule II et de 5 à 15 parties du colorant de formule III, avec la condition indiquée concernant ces proportions.

3. Préparation selon la revendication 1 ou 2, caractérisée en ce que le mélange des colorants de dispersion de formules I et II, et le cas échéant du colorant de cuve de formule III, est dans un état de fine division fini pour la teinture, résultant d'un broyage avec des agents de dispersion et d'une normalisation ou étalonnage.

4. Préparation selon la revendication 3 que l'on peut obtenir :
- en mélangeant les colorants individuels de base de formules I et II et le cas échéant celui de formule III, qui ont été préalablement finis séparément et normalisés (étalonnés), ou bien
- en mélangeant les colorants de formules I et II et le cas échéant celui de formule III, non-finis, puis, ou dès l'opération de mélange, en procédant au finissage et à la normalisation en commun, ou encore
- en finissant un mélange des colorants I et II ou leurs cristaux mixtes, obtenu par une copulation commune avec le p-anisidide de l'acide 3-hydroxy-2-naphtoïque des composés de diazonium d'une association de p-toluidine et d'aniline dans un rapport pondéral (80 à 20):(20 à 80), de préférence (70 à 25):(25 à 70), ainsi qu'en normalisant (étalonnage) ce mélange, éventuellement en commun avec le colorant de formule III.

5. L'emploi d'une préparation de colorants selon une ou plusieurs des revendications 1 à 4 comme colorant de dispersion rouge en vue d'obtenir des nuances caractéristiques ou des associations de nuances sur des fibres synthétiques seules ou mélangées avec d'autres fibres, suivant un procédé de teinture par épuisement à haute température (HT).

6. Emploi selon la revendication 5 pour la teinture par épuisement HT de bobinages ou pelotes.

7. Procédé de teinture par épuisement de matières textiles en fibres synthétiques, seules ou mélangées avec des fibres naturelles ou régénérées, à de hautes températures (HT), procédé caractérisé en ce que l'on utilise une préparation selon une ou plusieurs des revendications 1 à 4 comme colorant de dispersion rouge pour des teintures caractéristiques ou des combinaisons de teintures.

8. Procédé selon la revendication 7, caractérisé en ce que l'on teint des bobinages ou pelotes par épuisement à des températures de 105 à 140°C.

9. Matières textiles de fibres synthétiques, seules ou mélangées à d'autres fibres, qui sont teintes avec une préparation tinctoriale selon une ou plusieurs des revendications 1 à 4.

10. Matières textiles de fibres synthétiques seules ou mélangées à d'autres fibres, qui ont été teintes par un procédé selon la revendication 7 ou 8.

## Revendications (Revendications pour l'(les) Etat(s) contractant(s) suivant(s): ES)

1. Préparations de colorants en un mélange à plusieurs composants de colorants azoïques de dispersion rouges, préparations caractérisées en ce qu'elles comprennent :
de 80 à 20 parties en poids, du colorant de formule I ci-dessous : 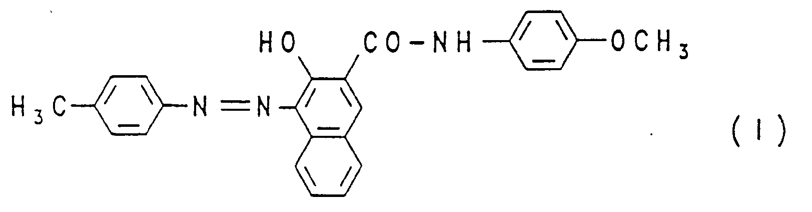 avec
de 20 à 80 parties en poids, du colorant de formule II : 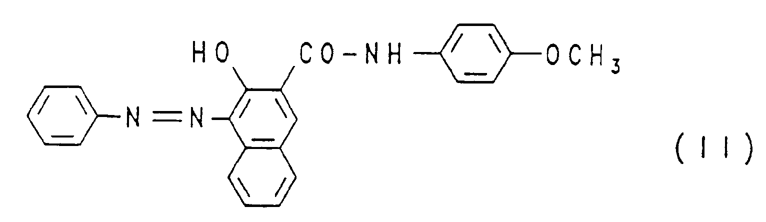 ainsi que, comme composant de nuançage,
de 0 à 20 parties en poids, du colorant rouge C.I. Vat Red 41 de numéro C.I. 73300, de formule III : 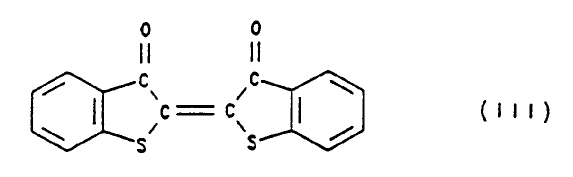 ou sont formées de ces colorants, la somme des proportions des colorants individuels de base étant toujours complétée à un poids total de la préparation de 100 parties et, dans le cas de produits du commerce, rapportée à la teneur en colorants purs.

2. Préparation selon la revendication 1 caractérisée en ce que les proportions des colorants individuels de base sont de 70 à 25 parties du colorant de formule I, de 25 à 70 parties du colorant de formule II et de 5 à 15 parties du colorant de formule III, avec la condition indiquée concernant ces proportions.

3. Préparation selon la revendication 1 ou 2, caractérisée en ce que le mélange des colorants de dispersion de formules I et II, et le cas échéant du colorant de cuve de formule III, est dans un état de fine division fini pour la teinture, résultant d'un broyage avec des agents de dispersion et d'une normalisation ou étalonnage.

4. Préparation selon la revendication 3 que l'on peut obtenir :
- en mélangeant les colorants individuels de base de formules I et II et le cas échéant celui de formule III, qui ont été préalablement finis séparément et normalisés (étalonnés), ou bien
- en mélangeant les colorants de formules I et II et le cas échéant celui de formule III, non-finis, puis, ou dès l'opération de mélange, en procédant au finissage et à la normalisation en commun, ou encore
- en finissant un mélange des colorants I et II ou leurs cristaux mixtes, obtenu par une copulation commune avec le p-anisidide de l'acide 3-hydroxy-2-naphtoïque des composés de diazonium d'une association de p-toluidine et d'aniline dans un rapport pondéral (80 à 20):(20 à 80), de préférence (70 à 25):(25 à 70), ainsi qu'en normalisant (étalonnage) ce mélange, éventuellement en commun avec le colorant de formule III.

5. Procédé d'obtention d'une préparation de colorants selon une ou plusieurs des revendications 1 à 4, procédé caractérisé en ce que l'on mélange les colorants individuels à l'état fini ou non, éventuellement avec des adjuvants, et si nécessaire on soumet le mélange de colorants non-finis à une opération de finissage, ou bien en ce que l'on diazote une association de p-toluidine et d'aniline dans un rapport pondéral de (80 à 20) : (20 à 80) puis on copule avec le p-anisidide de l'acide 3-hydroxy-2-naphtoïque et on soumet le mélange des colorants individuels I et II ainsi formé par cette copulation mixte, ou éventuellement leurs cristaux mixtes, à un traitement de finissage courant, le cas échéant en commun avec le colorant de formule III, et en ce que éventuellement on soumet le mélange à une normalisation ou étalonnage.

6. Procédé de teinture par épuisement de matières textiles en fibres synthétiques, seules ou mélangées avec des fibres naturelles ou régénérées, à de hautes températures (HT), procédé caractérisé en ce que l'on utilise une préparation selon une ou plusieurs des revendications 1 à 4 ou obtenue selon la revendication 5 comme colorant de dispersion rouge pour des teintures caractéristiques ou des combinaisons de teintures.

7. Procédé selon la revendication 6, caractérisé en ce que l'on teint des bobinages ou pelotes par épuisement à des températures de 105 à 140°C.

8. Matières textiles de fibres synthétiques, seules ou mélangées à d'autres fibres, qui sont teintes avec une préparation tinctoriale selon une ou plusieurs des revendication 1 à 4 ou obtenue selon la revendication 5.

9. Matières textiles de fibres synthétiques seules ou mélangées à d'autres fibres, qui ont été teintes par un procédé selon la revendication 6 ou 7.
